(19) Europäisches Patentamt / European Patent Office / Office européen des brevets

(11) **EP 4 535 297 B1**

## (12) FASCICULE DE BREVET EUROPEEN

(45) Date de publication et mention de la délivrance du brevet:
**24.06.2026  Bulletin 2026/26**

(21) Numéro de dépôt: **24203686.1**

(22) Date de dépôt: **30.09.2024**

(51) Classification Internationale des Brevets (IPC):
**G06V 10/82** *(2022.01)*     **G06V 10/44** *(2022.01)*
**G06V 10/764** *(2022.01)*

(52) Classification Coopérative des Brevets (CPC):
**G06V 10/82; G06V 10/454; G06V 10/764**

(54) **TRANSFORMATEUR DE DÉTECTION POUR LA DÉTECTION D'OBJETS DANS DES IMAGES NUMÉRIQUES BASÉ SUR UN PARTITIONNEMENT EN SOUS-GROUPES DE L ENSEMBLE DES REQUÊTES D'OBJETS**

DETEKTIONSTRANSFORMATOR ZUR OBJEKTDETEKTION IN DIGITALEN BILDERN BASIEREND AUF UNTERGRUPPENPARTITIONIERUNG DER OBJEKTABFRAGEANORDNUNG

DETECTION TRANSFORMER FOR OBJECT DETECTION IN DIGITAL IMAGES BASED ON A GROUP PARTITIONING OF THE SET OF OBJECT REQUESTS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité:  **02.10.2023  FR 2310521**

(43) Date de publication de la demande:
**09.04.2025  Bulletin 2025/15**

(73) Titulaires:
• **Pari Mutuel Urbain**
  **75017 Paris (FR)**
• **CY Cergy Paris Université**
  **95011 Cergy-Pontoise Cedex (FR)**

(72) Inventeurs:
• **SENTHIVEL, Tharsan**
  **78018 PARIS (FR)**
• **VU, Son**
  **78510 TRIEL SUR SEINE (FR)**

(74) Mandataire: **Regimbeau**
**20, rue de Chazelles**
**75847 Paris Cedex 17 (FR)**

(56) Documents cités:
• **CHEN QIANG ET AL: "GROUP DETR: FAST TRAINING CONVERGENCE WITH DECOUPLED ONE-TO-MANY LABEL ASSIGNMENT", 26 July 2022 (2022-07-26), pages 1 - 9, XP093141390, Retrieved from the Internet <URL:https://arxiv.org/abs/2207.13085v1> [retrieved on 20240314]**
• **ZBONTAR JURE ET AL: "Barlow twins: self-supervised learning via redundancy reduction", vol. 139, 2021, pages 12310 - 12323, XP093141491, ISSN: 2331-8422, Retrieved from the Internet <URL:https://proceedings.mlr.press/v139/zbontar21a.html> [retrieved on 20240314]**
• **SENTHIVEL THARSAN ET AL: "Detection Transformer with Diversified Object Queries", 2023 IEEE INTERNATIONAL CONFERENCE ON IMAGE PROCESSING (ICIP), IEEE, 8 October 2023 (2023-10-08), pages 2515 - 2519, XP034467047, DOI: 10.1109/ICIP49359.2023.10221970**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**EP 4 535 297 B1**

**Description**

DOMAINE DE L'INVENTION

La présente invention concerne le domaine de la vision par ordinateur, et plus spécifiquement le domaine de la détection d'objets dans une image numérique.

Un des buts de la détection d'objets dans une image numérique est de prédire un ensemble de boîtes englobantes dans l'image, chacune contenant un objet détecté, et d'attribuer à chaque boîte une classe correspondant au type d'objet détecté.

L'intelligence artificielle (IA) a révolutionné le domaine de la vision par ordinateur, permettant aux machines de percevoir et de comprendre le monde visuel à un niveau sans précédent.

Différentes technologies ont été mises en œuvre pour résoudre cette problématique générale.

En 2014, les réseaux de neurones convolutifs régionaux ou "RCNN" (pour « Region-based Convolutional Neural Network ») ont été proposés. Ils sont constitués de deux étapes principales, et on les classifie du coup dans une famille de détecteurs en 2 étapes (ou « Two-stage-detectors » en anglais). L'approche calcule d'abord une liste de propositions des zones d'intérêts sous forme de boîte englobante dans une étape que l'on appelle "propositions de régions", puis, dans une seconde étape on transmet ces régions à un réseau de neurones convolutif (ou "CNN") pour localiser et classifier les objets.

En parallèle, une autre catégorie d'algorithmes de détecteurs en une étape (ou "One-stage-detectors" en anglais) est développée. Parmi les plus connus figure l'architecture "YOLO" qui est présenté dans sa première version dans Redmon, J., Divvala, S.K., Girshick, R.B., & Farhadi, A. (2015). « You Only Look Once: Unified, Real-Time Object Detection". 2016 IEEE Conference on Computer Vision and Pattern Recognition (CVPR), 779-788. Yolo est parvenu à être très rapide en supprimant l'étape de la proposition de régions pour la remplacer par un seul réseau qui traite la détection de bout en bout. La précision restait inférieure aux méthodes de "Two-stage-detectors" mais, avec l'évolution de "YOLO" jusqu'à sa quatrième version en 2020, de nombreuses améliorations ont été apportées pour gagner en précision.

Plus récemment, il a été proposé d'utiliser le mécanisme des transformateurs, déjà utilisé dans le domaine distinct de la reconnaissance de la parole et de la traduction automatique, pour la détection d'objets.

L'une des premières tentatives réussies d'intégration des transformateurs dans la vision par ordinateur a été le modèle Vision Transformer (ViT), introduit dans Dosovitskiy, Alexey, Lucas Beyer, Alexander Kolesnikov, Dirk Weissenborn, Xiaohua Zhai, Thomas Unterthiner, Mostafa Dehghani, Matthias Minderer, Georg Heigold, Sylvain Gelly, Jakob Uszkoreit and Neil Houlsby. "An Image is Worth 16x16 Words: Transformers for Image Recognition at Scale." ArXiv abs/2010.11929 (2020).

Le modèle ViT traite une image comme une séquence de blocs de pixels (ou « patchs ») non superposés et applique une architecture de transformateur standard pour traiter ces patchs. Cette approche a démontré des performances compétitives sur les tâches de classification d'images, surpassant même les CNN de pointe dans certains cas.

A la suite du succès de ViT, plusieurs autres modèles basés sur des transformateurs ont été proposés pour diverses tâches de vision par ordinateur.

Par exemple, le modèle DETR, introduit dans Carion, Nicolas, Francisco Massa, Gabriel Synnaeve, Nicolas Usunier, Alexander Kirillov and Sergey Zagoruyko. "End-to-End Object Detection with Transformers." ArXiv abs/2005.12872 (2020) exploite les transformateurs pour la détection d'objets et obtient des résultats compétitifs par rapport aux méthodes de détection d'objets traditionnelles.

Ce modèle DETR (pour « DEtection Transformer », en anglais) repose sur une architecture en 4 réseaux neuronaux : un premier réseau traite l'imagine numérique pour fournir une carte de caractéristiques, cette carte est fournie à un second réseau neuronal, ou encodeur, dont la sortie est fournie à un troisième réseau neuronal, ou décodeur.

Le décodeur prend également en entrée des requêtes d'objets (« *object queries* ») afin de prédire, en collaboration avec un quatrième réseau neuronal, un résultat (boite englobante associée à une classe) pour chaque requête, en utilisant les informations fournies par le décodeur.

De nombreux développements de ce modèle DETR ont été proposés plus récemment, notamment pour préciser la façon de déterminer les requêtes et leur influence sur les résultats prédits.

Par exemple, il a été proposé dans Chen, Qiang, Xiaokang Chen, Jian Wang, Haocheng Feng, Junyu Han, Errui Ding, Gang Zeng and Jingdong Wang. "Group DETR: Fast DETR Training with Group-Wise One-to-Many Assignment." (2022) de présenter des groupes de requêtes pendant l'apprentissage afin d'assigner une seule étiquette à chaque groupe, ce qui conduit à autant de requêtes positives qu'il y a réellement d'objets dans l'image numérique.

Toutefois, malgré le grand nombre de groupes utilisés en apprentissage, il s'avère que seule une partie de l'information est réellement exploité. En effet, uniquement un seul groupe de requêtes est utilisé lors de la phase d'inférence (ou de prédiction), sous exploitant de la sorte l'information issue de la phase d'apprentissage.

Il existe donc un besoin d'améliorer les propositions actuelles de l'état de la technique pour maximiser le potentiel de l'ensemble de requêtes, afin d'améliorer les performances en détection d'objets dans les images numériques.

RESUME DE L'INVENTION

À ces fins, selon un premier aspect, la présente invention peut être mise en œuvre par un procédé d'apprentissage d'un modèle de détection d'objets dans une image numérique, ledit modèle étant du type transformateur de détection et comportant un premier réseau neuronal adapté pour déterminer des caractéristiques au sein de ladite image numérique, un encodeur pour générer des informations à partir desdites caractéristiques et un décodeur comportant une couche d'auto-attention, ledit décodeur étant adapté pour générer des prédictions à partir de requêtes d'objets en fonction d'informations fournies par ledit encodeur, dans lequel lesdites requêtes d'objets sont structurés sous forme de sous-groupes formant une partition de l'ensemble desdites requêtes, ledit apprentissage comprenant une recherche d'appariement des prédictions de chaque sous-groupe avec un même ensemble d'apprentissage

Suivant des modes de réalisation préférés, l'invention comprend une ou plusieurs des caractéristiques suivantes qui peuvent être utilisées séparément ou en combinaison partielle entre elles ou en combinaison totale entre elles :

- ladite couche d'auto-attention est adaptée pour permettre un apprentissage indépendant pour chaque sous-groupe.

- il est appliqué un masque d'attention à ladite couche d'auto-attention, ledit masque d'attention étant prévu pour permettre la transmission d'information uniquement au sein d'un sous-groupe.

- une fonction de coût est prévue pour optimiser la diversification desdites requêtes d'objet.

- ladite fonction de coût est basée sur une matrice de corrélation supervisée pendant ledit apprentissage afin que ses valeurs soient comprises entre deux bornes prédéfinies.

Un autre aspect concerne un procédé pour la détection d'objets au sein d'une image numérique, ledit procédé comportant un procédé d'apprentissage tel que précédemment décrit.

Selon un mode de réalisation, ladite image numérique est issue d'un flux d'images généré par une caméra vidéo.

Un autre aspect de l'invention concerne un programme d'ordinateur apte à être mis en œuvre sur un point d'accès à un réseau de télécommunication sans fil, le programme comprenant des instructions de code qui, lorsqu'il est exécuté par un processeur, réalise les étapes du tel que précédemment décrit.

Un autre aspect de l'invention concerne un dispositif de traitement comportant des moyens pour mettre en œuvre le procédé tel que précédemment décrit.

D'autres caractéristiques et avantages de l'invention apparaîtront à la lecture de la description qui suit d'un mode de réalisation préféré de l'invention, donnée à titre d'exemple et en référence aux dessins annexés.

BREVE DESCRIPTION DES FIGURES

Les dessins annexés illustrent l'invention :

la figure 1 illustre un exemple de mise en œuvre d'un procédé selon un mode de réalisation de l'invention ;

la figure 2 schématise une architecture d'une mise en œuvre possible d'un transformateur de détection selon des modes de réalisation de l'invention ;

la figure 3 illustre un décodeur associé à une couche de détection, selon un mode de réalisation de l'invention, lors de la phase d'apprentissage ;

la figure 4 illustre un exemple de matrice d'attention selon un mode de réalisation de l'invention.

DESCRIPTION DETAILLEE DE MODES DE REALISATION DE L'INVENTION

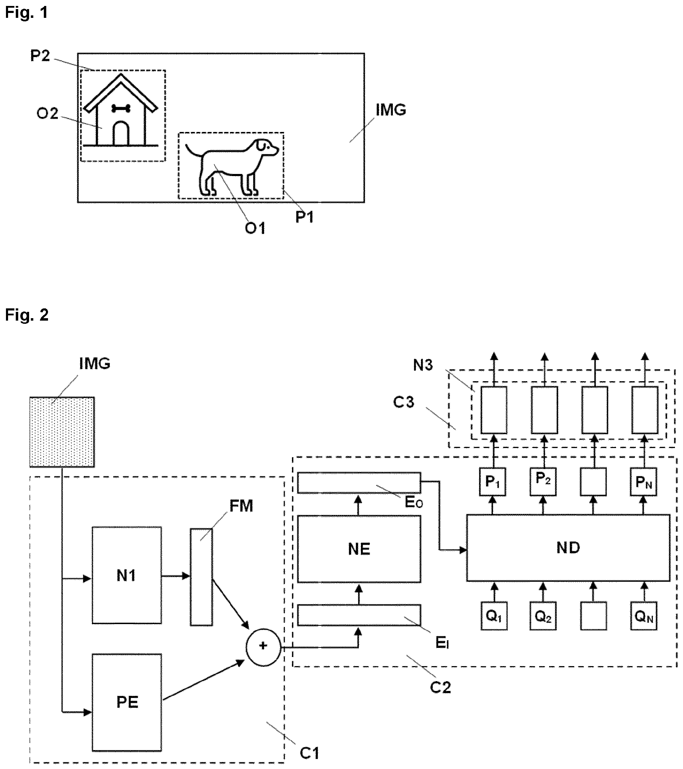

La figure 1 illustre un exemple de mise en œuvre d'un procédé selon un mode de réalisation de l'invention.

Cet exemple illustre une image numérique IMG dans lequel deux objets sont représentés : un chien, O1 et une niche, O2.

Le procédé vise à détecter ces objets, c'est-à-dire d'une part à déterminer une boîte englobante, respectivement P1, P2, correspondant à chacun de ces objets, et, pour chaque objet déterminer une classe associée.

Les boites englobantes, ou *« bounding box »* en anglais sont des formes géométrique (généralement rectangulaire) contenant l'objet détecté. Le procédé vise également à optimiser ces boîtes, c'est-à-dire à trouver la boîte de surface minimal englobant l'objet.

La détermination des classes dépend de l'apprentissage qui a été effectué sur un ensemble d'apprentissage étiqueté. Elle consiste donc à attribuer à l'objet détecté dans une boîte englobante une classe correspondant à une des étiquettes apprises pendant la phase d'apprentissage.

Dans l'exemple illustré, on peut supposer que l'ensemble d'apprentissage comportait de nombreuses images représentants des chiens, de différentes races, dans différentes positions et échelles. Le réseau neuronal est alors à même de généraliser les différentes représentations associées à cette même étiquette « chien » de sorte à pouvoir associer une nouvelle représentation à la classe « chien ».

Un tel mécanisme peut être utilisé dans différentes tâches de détection d'objets dans des images numériques. En particulier, il peut s'appliquer à la détection dans des séquences d'images numériques, ou vidéo.

Ces images numériques peuvent être acquises par des capteurs appropriés (caméra photographique ou vidéo, éventuellement caméra infrarouge, etc.), et traitées par une plateforme de traitement comportant au moins un microprocesseur, une ou plusieurs mémoires et d'éventuels circuits électroniques supplémentaires, prévus pour, en collaboration, mettre en œuvre le procédé proposé.

En particulier, la plateforme peut traiter les images acquises au fil de l'eau afin de permettre la détection d'objets en temps réel ou quasi-réel.

Par exemple, des modèles basés sur des transformateurs ont été utilisés pour des tâches telles que la compréhension de vidéos, la compréhension de scènes et le traitement de nuages de points 3D.

De nombreuses utilisations sont possibles aux mécanismes de détection d'objets dans des images ou dans des flux d'images, par exemple dans le domaine sportif, mais également dans tout autre domaine (vidéo-surveillance, etc.)

La détection d'un objet dans une image ou dans une séquence d'images (ou vidéos) peut permettre de positionner un marqueur sur l'objet détecté, ou tout autre information associée à l'objet et par exemple récupérable via une base de données.

Selon les cas d'usage, et/ou les choix d'un utilisateur, différents types d'information peuvent être ainsi affichés en superposition avec l'image (ou les images) et positionnées de sorte que l'utilisateur puisse bien associer ces informations à l'objet détecté.

Plusieurs objets peuvent être traités en parallèle : par exemple sur une course, ou dans un match d'un sport collectif, les noms des différents participants peuvent ainsi être affichés en superposition et en regard de leur position sur l'image.

Également, une interface homme-machine peut être prévue pour que l'utilisateur puisse sélectionner un objet particulier (joueur, cheval, vélo, voiture...) et le suivre tout au long de l'événement (course, match...) au moyen d'un marqueur particulier permettant de le distinguer des autres objets.

Un autre exemple d'utilisation est l'extraction des objets détectés pour nourrir des modèles d'évènements (courses, matchs...) virtuels, notamment pour des jeux vidéos réalistes, ou pour des vidéos d'analyse ou de reportage à partir des données ainsi collectées.

Des scènes particulièrement intéressantes peuvent également être extraites pour être diffuser à nouveau ou modéliser, voir commercialiser sous d'autres formes (NFT....).

Dans le domaine de courses sportives, par exemple, on peut détecter les coureurs, les vélos, les voitures, ou les chevaux, franchissant une ligne d'arrivée.

Par exemple, pour une course de chevaux, un tel mécanisme peut permettre de :

- identifier tous les chevaux sur une course en temps réel pour préciser à un utilisateur leurs positions sur une vidéo de manière précise en y intégrant quelques métadonnées telles que la vitesse, le nom, l'âge, un historique de course, etc. via un croisement avec une base de données,

- détecter les partants dans une course afin de déterminer si tous les chevaux sont prêts au départ,

- détecter les anomalies lors d'une course, par exemple si le bon nombre de chevaux est sur piste,

- détecter et compter les personnes présentes dans l'hippodrome,

- collecter des données sur le positionnement d'un cheval sur l'hippodrome tout au long de la course afin d'augmenter les connaissances sur le comportement des chevaux,

- utiliser ces connaissances afin d'afficher un cheval « fantôme » lors d'une autre course afin de permettre une comparaison visuelle entre les comportements d'un même cheval lors de différentes courses,

- construire des bases de statistiques à partir d'un ensemble de courses afin de déterminer des indicateurs sur les chevaux, sur les jockeys,

Ces exemples peuvent s'appliquer bien évidemment à d'autres types de courses : courses automobiles, courses de vélo, course à pied (100 mètres, marathon...), etc.

Dans le cadre de sports collectifs (football, rugby...), on peut également suivre les différents joueurs comme évoqués précédemment, pour différentes applications. On peut également détecter d'autres types d'objets (ballon...).

On peut en déduire un classement d'une course de façon automatique et immédiate, facilitant ainsi la gestion des courses pour un opérateur.

Le procédé de détection d'objet proposé se base sur le modèle DETR

Il est proposé d'améliorer le procédé d'apprentissage du modèle DETR, afin de constituer un modèle plus efficace permettant, en phase de prédiction, une meilleure détection des objets dans les images numériques soumises.

Le procédé proposé est indépendant de l'ensemble d'apprentissage. Celui-ci doit juste associer un ensemble d'images numériques avec des étiquettes ou « vérité du terrain » (« ground truth » en anglais).

Ces étiquettes offrent une base de comparaison pour les prédictions établie par le transformateur pour chaque image. Les erreurs résultantes de ces comparaisons permettent de modifier itérativement l'état du transformateur (les différents paramètres internes, ou « poids synaptiques ») jusqu'à convergence.

L'ensemble d'apprentissage peut être une base disponible au public, comme par exemple la base Coco diffusée par la société Microsoft (pour « Common Object in Context ». Cette base a été décrite dans l'article Lin, Tsung-Yi, Michael Maire, Serge J. Belongie, James Hays, Pietro Perona, Deva Ramanan, Piotr Dollár and C. Lawrence Zitnick. "Microsoft COCO: Common Objects in Context." European Conference on Computer Vision (2014).

Comme évoqué précédemment, le modèle DETR (pour « DEtection Transformer » en anglais, c'est-à-dire Transformateur de détection) a été introduit par l'article de Carion, Nicolas, Francisco Massa, Gabriel Synnaeve, Nicolas Usunier, Alexander Kirillov and Sergey Zagoruyko. "End-to-End Object Detection with Transformers." ArXiv abs/2005.12872 (2020).

La figure 2 illustre une architecture d'une mise en œuvre possible d'un transformateur de détection DETR.

Un tel transformateur DETR peut se décomposer en trois composants principaux :

- un premier composant C1 comportant un premier réseau neuronal, N1, prévu pour déterminer un ensemble de caractéristiques pour chaque image numérique soumise en entrée ;

- un second composant C2 comportant un second réseau neuronal de type encodeur NE - décodeur ND ;

- un troisième composant C3 comportant un ensemble de réseaux neuronaux (couche de détection) N3 prévu pour déterminer une prédiction de détection à partir de la couche de sortie du décodeur du second réseau neuronal N2.

Selon un mode de réalisation, un tel transformateur DETR peut être mis en œuvre sur une plateforme d'intelligence artificielle ayant comme fonctionnalité de proposer des modèles classiques de réseaux neuronaux, tels que des réseaux neuronaux convolutifs et des réseaux neuronaux encodeurs-décodeurs.

L'article de Paszke, Adam, Sam Gross, Francisco Massa, Adam Lerer, James Bradbury, Gregory Chanan, Trevor Killeen, Zeming Lin, Natalia Gimelshein, Luca Antiga, Alban Desmaison, Andreas Köpf, Edward Yang, Zach DeVito, Martin Raison, Alykhan Tejani, Sasank Chilamkurthy, Benoit Steiner, Lu Fang, Junjie Bai and Soumith Chintala. "PyTorch: An Imperative Style, High-Performance Deep Learning Library" Neural Information Processing Systems (2019), propose une librairie fournissant des composants permettant de mettre en œuvre aisément une architecture DETR en une cinquantaine de lignes de code.

Le premier réseau neuronal N1 est typiquement un réseau neuronal convolutif, CNN (pour « Convolutional Neural Network » en anglais).

Ce premier réseau neuronal N1 vise à extraire une carte de caractéristiques FM ou « feature map » selon la terminologie habituelle en langue anglaise, à partir d'une image numérique qui lui est soumise.

L'image numérique peut être représentée dans un espace $C_0 \times H_0 \times W_0$, avec $H_0$, $W_0$ représentant, respectivement la hauteur et la largeur de l'image, et $C_0$ représentant le nombre de canaux par pixels, typiquement un codage de la couleur des pixels.

La carte de caractéristiques FM générée par le premier réseau de neurones peut être représentée dans un espace $C \times W \times H$. En général, la largeur W et la hauteur H de la carte de caractéristiques sont réduites, par rapport aux dimensions de l'image numérique. A titre d'exemple, on peut considérer $W = W_0/32$ et $H = H_0/32$. Le nombre de canaux C peut être plus important. Une valeur typique est C=2048.

Le second composant C2 correspondant à un réseau encodeur-décodeur, que l'on peut décomposer en un premier sous-réseau, ou réseau encodeur (ou plus simplement encodeur) NE, et un second sous-réseau, ou réseau décodeur (ou plus simplement décodeur) ND.

Le réseau encodeur NE prend en entrée un vecteur $E_I$ construit à partir de la carte de caractéristiques FM et d'un encodage spatial des positions PE.

La hauteur et la largeur de la carte de caractéristiques FM sont donc transformés en un espace monodimensionnel correspondant au vecteur d'entrée $E_I$. Dans la mesure où l'on souhaite que le transformateur DETR soit invariant aux permutations de l'espace d'entrée (c'est-à-dire à l'ordre des requêtes), il est nécessaire d'incorporer dans l'information gérée par l'encodeur des données spatiales. Aussi, un encodage positionnel PE est inséré dans le vecteur d'entrée $E_I$, présenté à la couche d'entrée du réseau encodeur NE.

Le réseau encodeur NE encode et enrichit la carte de caractéristique FM afin d'obtenir une carte de caractéristiques enrichie $E_O$ en sortie.

Le réseau décodeur ND traite un ensemble de requêtes d'objets $Q_1$, $Q_2$... $Q_N$ afin de générer des prédictions $P_1$, $P_2$...$P_N$ respectivement, en utilisant les informations sur l'image numérique considérée telles que capturée par la sortie $E_O$ du réseau encodeur NE.

Chaque prédiction est traitée de façon indépendante par un réseau neuronal d'un ensemble de réseaux neuronaux N, afin de déterminer une prédiction (finale) de détection à partir de la couche de sortie du décodeur ND. Ces réseaux neuronaux sont, dans l'architecture DETR originelle, des réseaux à propagation avant (FFN, pour « Feed Forward Network » en anglais).

Pour chaque requête d'objets $Q_1$, $Q_2$... $Q_N$, le transformateur génère donc une prédiction. Cette prédiction peut être fournie à une couche de détection, N3 afin de générer une prédiction finale consistant

- soit en une boîte englobante prédite et une classe correspondant au type d'objet détecté (requête positive), ou,

- soit en une classe correspondant à la non-détection d'un objet ou un score de détection extrêmement bas (requête négative).

Ce sous-réseau N3 est typiquement un réseau à propagation avant (FFN).

L'article susmentionné « End-to-End Object Detection with Transformers » fournit davantage de détails sur l'architecture, le procédé d'apprentissage et le procédé d'inférence du transformateur de détection DETR.

Depuis la publication de cet article, de nombreux travaux ont été entrepris pour améliorer le transformateur DETR. Un grand nombre de ces travaux visent à améliorer les performances de DETR notamment en termes de vitesse de convergence, et également à comprendre le rôle que peuvent jouer les requêtes d'objets dans le comportement du décodeur ND et d'étudier comment les utiliser afin d'améliorer les performances globales du transformateur.

En particulier, des travaux consistent à déterminer le contenu des requêtes d'objets.

L'architecture même d'un transformateur de détection DETR impose que ces requêtes aient des caractéristiques communes avec l'entrée de l'encodeur, et contiennent donc un encodage de positions. D'une façon générale, donc, les requêtes d'objets contiennent une position à partir de laquelle le décodeur ND (en collaboration avec la couche de détection N3) doit tenter de prédire une boîte englobante optimisée et une classe d'un objet détecté.

Différents travaux ont été proposés pour préciser les encodages de position des requêtes permettant d'améliorer les performances du décodeur ND en apprentissage et/ou en prédiction (ou inférence).

Par exemple, la requête peut être un vecteur de caractéristiques, les coordonnées d'une boîte englobante (non optimisée et donc dont l'apprentissage consistera à faire évoluer les coordonnées), une coordonnée ponctuelle (qui pourra évoluer en apprentissage et dont les dimensions de la boîte englobante sont également recherchées), etc.

Il est à noter que le procédé proposé peut s'adapter à différents modes de réalisation concernant la structure des requêtes d'objets et est donc indépendant de ces requêtes.

En apprentissage, on cherche à optimiser les paramètres du décodeur afin qu'il génère les bonnes prédictions à partir des requêtes d'objets, et des sorties de l'encodeur.

Il a été constaté que l'apprentissage est sensible au nombre de requêtes positives, c'est-à-dire qui correspondent à la prédiction d'une classe d'objet et d'une boîte englobante, par opposition aux requêtes négatives qui correspondent à la prédiction d'une classe correspondant à la non-détection d'un objet.

L'article suivant, précédemment cité, a particulièrement étudié ce phénomène : Chen, Qiang, Xiaokang Chen, Jian Wang, Haocheng Feng, Junyu Han, Errui Ding, Gang Zeng and Jingdong Wang. "Group DETR: Fast DETR Training with Group-Wise One-to-Many Assignment." (2022).

Cet article constate qu'un grand nombre de requêtes positives améliore les performances en apprentissage mais que le nombre de requêtes en général n'améliore que fort peu les performances. Il conviendrait donc d'augmenter le ratio entre requêtes positives et requêtes négatives.

Comme on veut par ailleurs éviter d'assigner plusieurs prédictions positives à une même étiquette, ce qui est typiquement fait dans les approches « One-to-many » (un vers plusieurs), entrainant la nécessité d'une étape de filtrage en post-traitement pour retirer les multi-prédiction, l'article propose de grouper les requêtes d'objets en assignant plusieurs requêtes positives par étiquette mais en découplant ces assignations dans plusieurs groupes indépendante, de sorte qu'on ait uniquement l'assignation d'une requête positive à une étiquette donnée dans chacun des groupes.

En inférence, uniquement un unique groupe est conservé, afin d'écarter la redondance des caractéristiques apprises.

Les inventeurs ont constaté que, ce faisant, l'ensemble des prédictions effectuées par le décodeur ND lors de la phase d'apprentissage n'est pas pris en compte. Notamment, l'impact des requêtes négatives n'est pas pris en compte dans le modèle entraîné, ni même étudié dans la littérature scientifique.

Un des buts est donc de tirer profit des requêtes négatives dans le processus d'apprentissage afin d'optimiser le modèle.

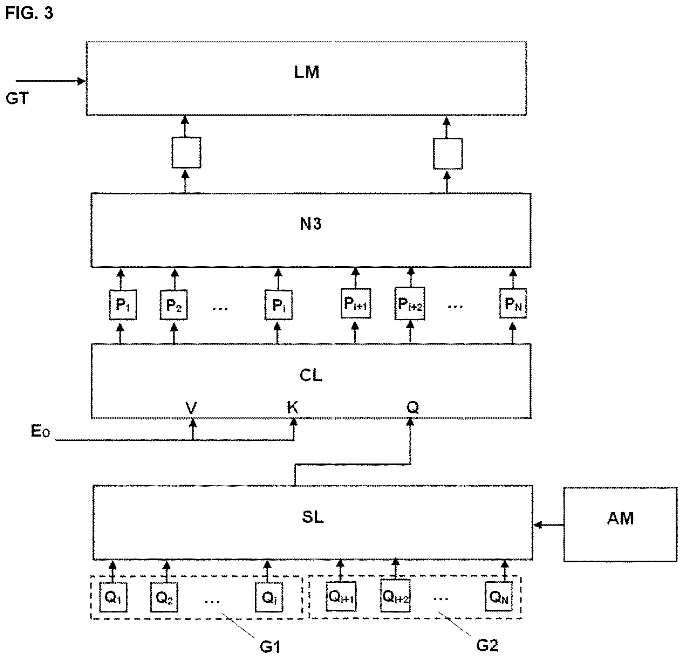

La figure 3 illustre un décodeur ND associé à une couche de détection N3, selon un mode de réalisation de l'invention, lors de la phase d'apprentissage.

Ce décodeur ND est principalement constitué d'une première couche d'auto-attention (« *self attention* » en anglais), SL, et d'une seconde couche d'attention croisée (« *cross attention* » en anglais), CL.

Le fonctionnement de ces couches d'attention, SL, CL peut être conforme aux mécanismes d'un transformateur de détection DETR, tel que décrit dans l'article fondateur ou dans les multiples développements ultérieurs. Ce fonctionnement a été initialement décrit dans l'article de Vaswani, Ashish, Noam M. Shazeer, Niki Parmar, Jakob Uszkoreit, Llion Jones, Aidan N. Gomez, Lukasz Kaiser and Illia Polosukhin. « Attention is All you Need », NIPS (2017).

Selon le procédé proposé, les requêtes d'objets $Q_1$, $Q_2$... $Q_N$ sont partitionnés en K sous-groupes. Autrement dit chaque requête est associée à un et un unique sous-groupe $G_i$.

Si l'on considère N requêtes d'objets, on peut donc définir l'ensemble de K sous-groupes $G_1$, $G_2$... $G_K$ avec :

[Math. 1]

$$G_i = \left[ q_{(i-1)\frac{N}{K}+1}, \dots, q_{i\frac{N}{K}} \right]$$

Dans l'exemple de la figure 3, sous sous-groupes $G_1$, $G_2$ sont représentés, le premier sous-groupe est constitué des requêtes $Q_1$ à $Q_i$ et le second sous-groupe $G_2$ est constitué des requêtes $Q_{i+1}$ à $Q_N$.

Classiquement, chaque requête d'objets $Q_1$, $Q_2$... $O_N$ est traité par le décodeur ND puis par la couche de détection N3 pour capturer l'information fournie par l'encodeur NE.

Selon le procédé proposé, durant la phase d'apprentissage, les prédictions correspondant à chaque sous-groupe $G_i$ sont confrontées à l'ensemble des étiquettes GT (pour « ground truth », vérités du terrain) de l'ensemble d'apprentissage.

Cette confrontation vise à former un appariement bipartite un-à-un (« one-to-one assignement » en anglais).

Cet appariement peut être vu comme un problème d'affectation. Ce type de problème peut être formalisé comme la recherche de l'attribution au mieux de tâches à des agents. Chaque agent peut réaliser une unique tâche pour un coût donné et chaque tâche doit être réalisée par un unique agent. Les affectations (c'est-à-dire les couples agent-tâche) ont toutes un coût défini. Le but est de minimiser le coût total des affectations afin de réaliser toutes les tâches.

Plus formellement, l'objectif est de déterminer un couplage d'une taille égale au nombre de tâches, de poids minimum dans un graphe biparti valué. S'il y a autant d'agents que de tâches, il s'agit de déterminer un couplage parfait de poids minimum dans un graphe biparti valué. Le problème d'affectation peut être résolu en temps polynomial par l'algorithme hongrois.

Ce type de problème est bien décrit dans la littérature scientifique dont la page Wikipedia forme un bon point d'entrée :

https://en.wikipedia.org/wiki/Assignment_problem

L'appariement bipartite entre prédictions $P_1$, $P_2$... $P_N$ et les étiquettes GT peut être mis en œuvre par un algorithme hongrois. L'algorithme hongrois, classiquement utilisé dans les transformateurs de détection DETR a été proposé dans l'article de Harald W. Kuhn, « The Hungarian Method for the assignment problem » in Naval Research Logistic Quarterly, 2 (1955), pp. 83-97.

Autrement dit, l'approche est très différente de celle de la technique « Group DETR » exposé précédemment dans laquelle on fait artificiellement grossir l'ensemble des requêtes puisqu'ici cet ensemble de requêtes est constant mais les étiquettes de l'ensemble d'apprentissage sont confrontées à une pluralité de sous-groupes indépendamment les uns des autres.

Cette confrontation est effectuée par un mécanisme d'appariement LM qui vise à

- parmi les prédictions produites en sortie de la couche de détection N3, on recherche celles qui sont les plus proches de l'étiquette correspondante,

- on utilise les prédictions sélectionnées, correspondant à des requêtes positives, pour calculer une erreur en fonction d'une fonction de perte (ou « loss function » en anglais) et ainsi mettre à jour le réseau décodeur RN et la couche de détection N3.

Pour chaque sous-groupe, on dispose donc d'un ensemble de prédictions, chacun formant un tuple formé d'une prédiction de boîte englobant $\hat{b}_i$ et d'une prédiction de classe $\hat{c}_i$ (i variant dans l'intervalle correspondant au sous-groupe concerné).

Les étiquettes constituent également un ensemble de tuples, formés de boîtes englobantes $b_i$ et de classes $c_i$ (i variant sur l'ensemble d'apprentissage).

On cherche à appairer chaque sous-groupe avec l'ensemble d'apprentissage. Plus précisément, l'apprentissage comprend une recherche d'appariement des prédictions de chaque sous-groupe avec l'ensemble des étiquettes de l'ensemble d'apprentissage.

Dans l'algorithme hongrois qui peut être utilisé en apprentissage, on recherche donc un appariement optimal $\sigma_{Gk}$ pour chaque sous-groupe $G_k$, sur l'ensemble $\varepsilon$ des $\frac{N}{K}$ permutations possibles $\sigma$ ( $\frac{N}{K}$ étant le nombre de requêtes dans chaque sous-groupe).

[Math. 2]

$$\sigma_{Gk} = \underset{\sigma_{Gk} \epsilon \mathcal{E}}{\mathrm{argmin}} \sum_{i=1}^{\frac{N}{K}} C_{match}\left(y_i, \hat{y}_{q_{\sigma(i)}}\right)$$

$C_{match}(y_i, \hat{y}_{q_{\sigma(i)}})$ représente le coût d'appariement entre l'étiquette $y_i$ et la prédiction $\hat{y}_{q_{\sigma(i)}}$ d'index $q_{\sigma(i)}$ Chaque étiquette $y_i$ peut être vue comme ayant deux composantes, une classe $c_i$ et une boîte englobante $b_i$ : $y_i=(c_i, b_i)$.

De la même façon, chaque prédiction peut s'écrire : $\hat{y}_{q_i} = (c_{qi}^{Gk}, b_{qi}^{Gk})$

On peut alors écrire le coût d'appariment pour un sous-groupe $G_k$ comme :

[Math. 3]

$$C_{match}^{Gk} = \sum_{i=1}^{M}\left[\lambda_{cls}.\,cls\left(p_{\sigma\hat{G}k}(i), c_{qi}^{Gk}\right) + \lambda_{box}.\,box\left(b(i), b_{qi}^{Gk}\right)\right]$$

Dans cette équation,

- M est le nombre d'étiquettes dans l'ensemble d'apprentissage

- Cls() et box() sont des fonctions de coûts permettant de calculer une distance entre, respectivement, deux classes et deux boîtes englobantes.

- $\lambda_{cls}$ et $\lambda_{box}$ sont deux coefficients, formant des paramètres réglables et pouvant être prédéfinis, de l'algorithme.

Cette équation exprimant le coût d'appariement $C_{match}^{Gk}$ pour un sous-groupe $G_k$ montre bien que chaque sous-groupe $G_k$ est mis en correspondance avec l'ensemble des étiquettes disponibles, M, ceci afin d'augmenter le nombre de requêtes positives.

De cette manière, nous effectuons une correspondance par sous-groupe entre les prédictions du sous-groupe Gk et l'ensemble des étiquettes de vérité de terrain dupliquées pour le sous-groupe Gk.

Selon un mode de réalisation de l'invention, on cherche à assurer des apprentissages indépendamment pour chaque sous-groupe $G_k$.

Pour ce faire, selon un mode de réalisation, on applique un masque d'attention AM à la couche d'auto-attention SL. Ce masque d'attention est prévu pour permettre la transmission d'information au sein d'un sous-groupe mais pas entre sous-groupes distincts.

Un tel masque d'attention AM peut prendre la forme d'une matrice dont les lignes et colonnes forment les N différentes requêtes d'objets $Q_1$, $Q_2$... $Q_N$ fournies en entrée de la couche d'auto-attention SL.

Cette matrice d'attention AM peut être constituée de sorte que chaque cellule a une valeur permettant de bloquer ou laisser l'échange d'information entre la requête en abscisse et la requête en ordonnée, selon si les requêtes appartiennent ou non à un même sous-groupe.

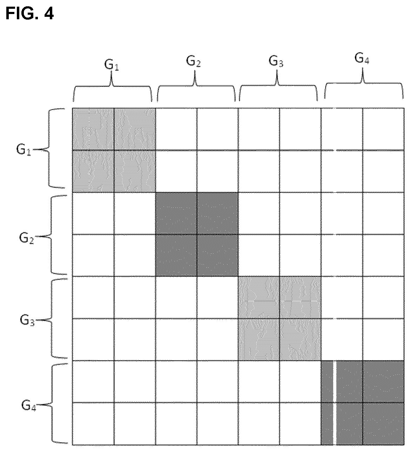

La figure 4 illustre un exemple de matrice d'attention pour 4 sous-groupes, $G_1$, $G_2$, $G_3$, $G_4$.

Les zones grisées correspondent aux cellules associées à des requêtes appartenant à des mêmes sous-groupes, tandis que les zones blanches correspondent à des cellules associées à des requêtes appartenant à des sous-groupes distincts. On associe aux zones grisées une valeur numérique (1) permettant, lors du calcul des sorties de la couche d'auto-attention la prise en compte des requêtes d'un même sous-groupe, et aux zones blanches une valeur numérique (0) permettant d'exclure les requêtes concernées dans ces mêmes calculs.

Selon un mode de réalisation, la matrice d'attention AM est additionné à l'attention générée par le calcul de similarité entre la requête Q et la clé K, généré par la requête d'objet, normalisé par un facteur d'échelle.

Ce mécanisme oblige de nombreuses requêtes à identifier collectivement un seul objet, réduisant ainsi la prévalence des requêtes négatives à une collection de requêtes redondantes qui, collectivement, renforcent la confiance dans la présence des objets. Facilitant un apprentissage solide, cette procédure engendre une efficacité accrue.

Néanmoins, au cours de la phase d'optimisation des requêtes d'objets appariés, une prédisposition à l'homogénéisation des caractéristiques apparaît. Pour exploiter le potentiel d'une convergence transparente des caractéristiques parmi ces requêtes d'objets, selon un mode de réalisation, on introduit une stratégie de diversification. Cette intervention stratégique, mise en œuvre dans l'espace d'interrogation, sert à accroître le caractère distinctif de l'interrogation.

Pour ce faire, il est proposé une nouvelle fonction de coût, qui peut être utilisée conjointement aux autres fonctions de coût pendant la phase d'apprentissage, selon un mode de réalisation de l'invention.

Cette fonction de coût se base sur une matrice de corrélation corr(). Cette matrice de corrélation donne une valeur de corrélation comprise entre -1 et 1 pour chaque paire de prédiction $P_i$ en sortie du transformateur de détection.

On peut superviser la matrice de corrélation pendant la phase d'apprentissage afin que les valeurs (en dehors de la diagonale) soient toujours comprises entre deux bornes prédéfinies $\alpha_1$, $\alpha_1$ formant une contrainte (avec $\alpha_1 < \alpha_2$).

Pour ce faire, on peut définir une fonction de coût $\mathcal{L}_{DOQ}$ de la forme suivante ayant pour but d'optimiser la diversification des requêtes d'objet :

[Math. 4]

$$\mathcal{L}_{DOQ} = \sum_{i \in OffDiag} \left( \sum_{\substack{j=1 \\ j \neq i}}^{N_i} corr\big(Dec_i, Dec_j\big) - \alpha_1 \right)^2 + \alpha_2^2$$

$Dec_i$ représente la sortie du réseau de neurones N3 et donc la prédiction que l'on cherche à apparier avec les étiquettes GT pendant cette phase d'apprentissage.

Comme évoqué précédemment, le sous-réseau N3 peut être un réseau à propagation avant (FFN).

On peut alors écrire

[Math. 5]

$$Dec_i = norm\left( FFN\left( softmax\left( \frac{(Q_i W_q) \times (FW_k)^T}{\sqrt{d_k}} \right) \times (FW_v) \right) \right)$$

F représente la carte de caractéristique, et $W_q$, $W_k$ et $W_v$ sont des matrices de poids synaptiques. $d_k$ est la dimension de la clé.

Le calcul de corrélation peut être effectué conformément aux méthodes connus et par exemple mises à disposition sur les plateformes de réseaux de neurones comme Pytorch.

Des informations sont par exemple disponibles sur les liens suivants :

https://pytorch.org/docs/stable/generated/torch.corrcoef.html
https://pytorch.org/docs/stable/generated/torch.cov.html

D'autres exemples de calcul des termes de corrélations sont bien évidemment accessibles à l'homme du métier.

La fonction de coût globale $\mathcal{L}$, utilisée pendant la phase d'apprentissage, peut être une combinaison linéaire de cette nouvelle fonction de coût avec les fonctions de coûts habituellement utilisées

[Math]

$$\mathcal{L} = \mathcal{L}_{DOQ} + \mathcal{L}_{cls} + \mathcal{L}_{box}$$

avec :

$\mathcal{L}_{cls}$ la fonction de coût évaluant la classification,

$\mathcal{L}_{box}$ la fonction de coût évaluant la prédiction d'une boîte englobante

$\mathcal{L}_{DOQ}$ la fonction de coût décrite ci-dessus évaluant la diversification des requêtes d'objets.

Selon un mode de réalisation, l'apprentissage peut se subdiviser en deux phases :

- Dans une première phase, un apprentissage conventionnel peut être effectué sur l'ensemble des sous-groupes, puis
- Dans une seconde phase, un apprentissage est mis en place séparément pour chaque sous-groupe, en utilisant la fonction de coût décrite précédemment. Pour chaque sous-groupe, on utilise des valeurs $\alpha_1$, $\alpha_1$ différentes.

Selon un mode de réalisation, un mécanisme classique de suppression non-maximum (NMS pour « Non-Maximum Suppression » en anglais) afin de contrebalancer la redondance dans les requêtes d'objet.

Cette redondance incite à séparer clairement les prédictions en deux groupes discernables : l'un constitué de prédictions apparentées, formant éventuellement plusieurs groupes, et l'autre englobant des prédictions disparates. L'incorporation du NMS dans ce contexte atténue efficacement les problèmes de redondance et amplifie l'efficacité de l'approche que nous proposons. Cependant, la technique conventionnelle du NMS gourmand a des effets néfastes sur les détections elles-mêmes. Cela est principalement dû à l'approche standard du NMS, qui classe les prédictions dans l'ordre décroissant de leurs scores.

En revanche, dans le cas de deux sous-groupes, la méthode que nous proposons implique la génération d'une matrice de coûts ($C_{pred}$) utilisant les paramètres de centre d'objet ($C_{center}$), de classe ($C_{class}$) et de taille de boîte ($C_{size}$) :

$$C_{pred} = \lambda_{box}(C_{center} + C_{size}) + \lambda_{class}(C_{class})$$

Cette approche facilite la formation de groupes contenant des boîtes identiques avec des attributs de classe, avec des paramètres de pondération respectivement $\lambda_{box} = 5$ et $\lambda_{class} = 2$.

Dans le cas de N groupes, nous répartissons les prédictions en N groupes en utilisant le top-N sur les scores de chaque requête d'objet. Par la suite, le NMS est appliqué individuellement à chacun de ces groupes de prédictions, ce qui permet d'obtenir un processus de suppression plus raffiné et plus efficace.

Le procédé proposé, dans ses différents modes de réalisation, permet de tirer profit des requêtes négatives lors de la phase d'apprentissage d'un transformateur de détection DETR.

Par des études expérimentales, il a été considéré que les instances classées comme négatives sur la base de leurs scores de prédiction présentent souvent des coordonnées de prédiction supérieures lorsqu'elles sont comparées aux valeurs de la vérité de base (étiquettes). Il est intéressant de noter que ces instances surpassent même les requêtes les plus fiables. En tirant parti de cette idée, il est présenté une approche qui exploite le potentiel des requêtes négatives en formant stratégiquement des sous-groupes de requêtes diversifiées. Cette stratégie innovante permet non seulement d'améliorer la détection d'objets dans différents scénarios, mais offre également la possibilité de détecter des objets à travers de multiples instances.

Le tableau suivant donne des indicateurs de performances pour différents transformateurs en détection DETR.

Le transformateur « Deformable DETR » (DETR déformable) est une évolution du transformateur DETR décrit dans l'article Zhu, Xizhou, Weijie Su, Lewei Lu, Bin Li, Xiaogang Wang and Jifeng Dai. "Deformable DETR: Deformable Transformers for End-to-End Object Detection." ArXiv abs/2010.04159 (2020)

Le transformateur « Conditional DETR » (DETR conditionnel) est une évolution du transformateur DETR décrit dans l'article Meng, Depu, Xiaokang Chen, Zejia Fan, Gang Zeng, Houqiang Li, Yuhui Yuan, Lei Sun and Jingdong Wang. "Conditional DETR for Fast Training Convergence." 2021 IEEE/CVF International Conference on Computer Vision (ICCV) (2021): 3631-3640.

Les mécanismes proposes peuvent être mise en œuvre tant avec le transformateur de détection d'origine qu'avec ses évolutions.

Chaque ligne, correspondant à une mise en œuvre distincte, comporte un nombre d'itérations permettant d'atteindre la convergence et des indicateurs de performances moyennes AP (pour « Average Performance »), globalement (AP) pour des petits objets détectés ($AP_S$), pour des objets moyens ($AP_M$) et pour des gros objets ($AP_L$).

[Tableau 1]

| Procédé | Itérations | AP | $AP_S$ | $AP_M$ | $AP_L$ |
|---|---|---|---|---|---|
| DETR | 500 | 42.0 | 62.4 | 45.8 | 61.1 |
| Deformable DETR | 12 | 38.3 | 58.0 | 41.7 | 51.4 |
| Deformable DETR + propositions | 12 | 39 | 58.4 | 42.3 | 51.9 |
| Conditional DETR | 12 | 36.6 | 57.3 | 39.4 | 53.4 |
| Conditional DETR + propositions | 12 | 37.1 | 58 | 39.6 | 54 |

Les différents mécanismes proposés permettent donc une amélioration substantielle des métriques d'évaluation de la détection d'objets sur la base de l'ensemble d'apprentissage COCO utilisé pour les tests.

Le procédé proposé est en outre applicable à d'autres modèles de transformateurs pour la détection d'objets dans des signaux numériques, par exemple dans des images ou des séquences d'images

Bien entendu, la présente invention n'est pas limitée aux exemples et au mode de réalisation décrits et représentés, mais est défini par les revendications. Elle est notamment susceptible de nombreuses variantes accessibles à l'homme de l'art.

**Revendications**

1. Procédé d'apprentissage d'un modèle de détection d'objets dans une image numérique, ledit modèle étant du type transformateur de détection et comportant un premier réseau neuronal (N1) adapté pour déterminer des caractéristiques au sein de ladite image numérique, un encodeur (NE) pour générer des informations à partir desdites caractéristiques et un décodeur comportant une couche d'auto-attention (SL), ledit décodeur étant adapté pour générer des prédictions ($P_1$, $P_2$... $P_N$) à partir de requêtes d'objets ($Q_1$, $Q_2$... $Q_N$) en fonction d'informations ($E_O$) fournies par ledit encodeur (NE),

   dans lequel lesdites requêtes d'objets sont structurés sous forme de sous-groupes ($G_1$, $G_2$... $G_K$) formant une partition de l'ensemble desdites requêtes, ledit apprentissage comprenant une recherche d'appariement des prédictions de chaque sous-groupe avec un même ensemble d'apprentissage, dans lequel ladite couche d'auto-attention (SL) est adaptée pour permettre un apprentissage indépendant pour chaque sous-groupe, dans lequel il est appliqué un masque d'attention (AM) à ladite couche d'auto-attention (SL), ledit masque d'attention étant prévu pour permettre la transmission d'information uniquement au sein d'un sous-groupe et dans lequel une fonction de coût est prévue pour optimiser la diversification desdites requêtes d'objet.

2. Procédé selon la revendication précédente, dans lequel ladite fonction de coût est basée sur une matrice de corrélation supervisée pendant ledit apprentissage afin que ses valeurs soient comprises entre deux bornes prédéfinies.

3. Procédé pour la détection d'objets au sein d'une image numérique, ledit procédé comportant un procédé d'apprentissage selon l'une des revendications précédentes.

4. Procédé selon l'une des revendications précédentes dans lequel ladite image numérique est issue d'un flux d'images généré par une caméra vidéo.

5. Programme d'ordinateur apte à être mis en œuvre sur un point d'accès à un réseau de télécommunication sans fil, le programme comprenant des instructions de code qui, lorsqu'il est exécuté par un processeur, réalise les étapes du procédé défini dans les revendications 1 à 4.

6. Dispositif de traitement comportant des moyens pour mettre en œuvre le procédé selon l'une des revendications 1 à 4.

**Patentansprüche**

1. Verfahren zum Trainieren eines Modells zur Detektion von Objekten in einem digitalen Bild, wobei das Modell vom Typ eines Detektions-Transformators ist und ein erstes neuronales Netz (N1) aufweist, das dazu angepasst ist, Merkmale innerhalb des digitalen Bildes zu bestimmen, einen Encoder (NE) zum Erzeugen von Informationen aus den Merkmalen und einen Decoder, der eine Selbstaufmerksamkeitsschicht (SL) aufweist, wobei der Decoder dazu angepasst ist, Vorhersagen $(P_1, P_2 ... P_N)$ aus Objektanfragen $(Q_1, Q_2 ... Q_N)$ in Abhängigkeit von Informationen $(E_O)$ zu erzeugen, die von dem Encoder (NE) bereitgestellt werden,
   wobei die Objektanfragen in Form von Untergruppen $(G_1, G_2 ... G_K)$ strukturiert sind, die eine Partition der Gesamtheit der Anfragen bilden, wobei das Training eine Suche nach Übereinstimmungen der Vorhersagen jeder Untergruppe mit demselben Trainingsdatensatz umfasst, wobei die Selbstaufmerksamkeitsschicht (SL) so angepasst ist, dass sie ein unabhängiges Training für jede Untergruppe ermöglicht, wobei auf die Selbstaufmerksamkeitsschicht (SL) eine Aufmerksamkeitsmaske (AM) angewendet wird, wobei die Aufmerksamkeitsmaske so vorgesehen ist, dass sie die Übertragung von Informationen nur innerhalb einer Untergruppe ermöglicht, und wobei eine Kostenfunktion vorgesehen ist, um die Diversifizierung der Objektanfragen zu optimieren.

2. Verfahren nach vorstehendem Anspruch, wobei die Kostenfunktion auf einer während des Trainings überwachten Korrelationsmatrix basiert, so dass ihre Werte zwischen zwei vordefinierten Grenzen liegen.

3. Verfahren zur Erkennung von Objekten in einem digitalen Bild, wobei das Verfahren ein Trainingsverfahren nach einem der vorstehenden Ansprüche aufweist.

4. Verfahren nach einem der vorstehenden Ansprüche, wobei das digitale Bild aus einem von einer Videokamera erzeugten Bildstrom stammt.

5. Computerprogramm, das geeignet ist, auf einem Zugangspunkt zu einem drahtlosen Telekommunikationsnetz ausgeführt zu werden, wobei das Programm Codeanweisungen umfasst, die, wenn es von einem Prozessor ausgeführt wird, die in den Ansprüchen 1 bis 4 definierten Verfahrensschritte durchführt.

6. Verarbeitungsvorrichtung, die Mittel zur Durchführung des Verfahrens nach einem der Ansprüche 1 bis 4 aufweist.

**Claims**

1. A method for training an object detection model in a digital image, said model being of the detection transformer type and comprising a first neural network (N1) adapted to determine features within said digital image, an encoder (NE) for generating information from said features, and a decoder comprising a self-attention layer (SL), said decoder being adapted to generate predictions $(P_1, P_2, ..., P_N)$ from object queries $(Q_1, Q_{(2)}, ..., Q_N)$ based on information $(E_O)$ provided by said encoder (NE), wherein said object queries are structured in the form of subgroups $(G_1, G_{(2)}, ..., G_K)$ forming a partition of the set of said queries, said learning comprising a search for matching the predictions of each subgroup with the same training set, wherein said self-attention layer (SL) is adapted to allow independent learning for each subgroup, wherein an attention mask (AM) is applied to said self-attention layer (SL), said attention mask being provided to allow the transmission of information only within a subgroup and wherein a cost function is provided to optimise the diversification of said object queries.

2. A method according to the preceding claim, wherein said cost function is based on a supervised correlation matrix during said learning so that its values lie between two predefined bounds.

3. A method for detecting objects within a digital image, said method comprising a learning process according to one of the preceding claims.

4. A method according to one of the preceding claims, wherein said digital image is derived from a stream of images generated by a video camera.

5. A computer program capable of being implemented on an access point in a wireless telecommunications network, the program comprising code instructions which, when executed by a processor, perform the steps of the method defined in claims 1 to 4.

6. A processing device comprising means for implementing the method according to one of claims 1 to 4.

**Fig. 1**

**Fig. 2**

14

FIG. 3

FIG. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **REDMON, J** ; **DIVVALA, S.K** ; **GIRSHICK, R.B** ; **FARHADI, A.** You Only Look Once: Unified, Real-Time Object Detection''. *2016 IEEE Conference on Computer Vision and Pattern Recognition (CVPR)*, 2015, 779-788
- **DOSOVITSKIY, ALEXEY** ; **LUCAS BEYER** ; **ALEXANDER KOLESNIKOV** ; **DIRK WEISSENBORN** ; **XIAOHUA ZHAI** ; **THOMAS UNTERTHINER** ; **MOSTAFA DEHGHANI** ; **MATTHIAS MINDERER** ; **GEORG HEIGOLD** ; **SYLVAIN GELLY**. An Image is Worth 16x16 Words: Transformers for Image Recognition at Scale. *ArXiv abs/2010.11929*, 2020
- **CARION, NICOLAS** ; **FRANCISCO MASSA** ; **GABRIEL SYNNAEVE** ; **NICOLAS USUNIER** ; **ALEXANDER KIRILLOV** ; **SERGEY ZAGORUYKO**. End-to-End Object Detection with Transformers.. *ArXiv abs/2005.12872*, 2020
- **CHEN, QIANG** ; **XIAOKANG CHEN** ; **JIAN WANG** ; **HAOCHENG FENG** ; **JUNYU HAN** ; **ERRUI DING** ; **GANG ZENG** ; **JINGDONG WANG**. *Group DETR: Fast DETR Training with Group-Wise One-to-Many Assignment*, 2022
- **LIN** ; **TSUNG-YI** ; **MICHAEL MAIRE** ; **SERGE J. BELONGIE** ; **JAMES HAYS** ; **PIETRO PERONA** ; **DEVA RAMANAN** ; **PIOTR DOLLÁR** ; **C. LAWRENCE ZITNICK**. Microsoft COCO: Common Objects in Context. *European Conference on Computer Vision*, 2014
- **CARION, NICOLAS** ; **FRANCISCO MASSA** ; **GABRIEL SYNNAEVE** ; **NICOLAS USUNIER** ; **ALEXANDER KIRILLOV** ; **SERGEY ZAGORUYKO**. End-to-End Object Detection with Transformers. *ArXiv abs/2005.12872*, 2020
- **PASZKE, ADAM** ; **SAM GROSS** ; **FRANCISCO MASSA** ; **ADAM LERER** ; **JAMES BRADBURY** ; **GREGORY CHANAN** ; **TREVOR KILLEEN** ; **ZEMING LIN** ; **NATALIA GIMELSHEIN** ; **LUCA ANTIGA**. PyTorch: An Imperative Style, High-Performance Deep Learning Library. *Neural Information Processing Systems*, 2019
- **VASWANI** ; **ASHISH** ; **NOAM M. SHAZEER** ; **NIKI PARMAR** ; **JAKOB USZKOREIT** ; **LLION JONES** ; **AIDAN N. GOMEZ** ; **LUKASZ KAISER** ; **ILLIA POLOSUKHIN**. Attention is All you Need. *NIPS*, 2017
- **HARALD W. KUHN**. The Hungarian Method for the assignment problem. *Naval Research Logistic Quarterly*, 1955, vol. 2, 83-97
- **ZHU, XIZHOU** ; **WEIJIE SU** ; **LEWEI LU** ; **BIN LI** ; **XIAOGANG WANG** ; **JIFENG DAI**. Deformable DETR: Deformable Transformers for End-to-End Object Detection. *ArXiv abs/2010.04159*, 2020
- **MENG, DEPU** ; **XIAOKANG CHEN** ; **ZEJIA FAN** ; **GANG ZENG** ; **HOUQIANG LI** ; **YUHUI YUAN** ; **LEI SUN** ; **JINGDONG WANG**. Conditional DETR for Fast Training Convergence. *2021 IEEE/CVF International Conference on Computer Vision (ICCV)*, 2021, 3631-3640